# EUROPÄISCHE PATENTSCHRIFT

(11) **EP 3 928 419 B1**
(45) Veröffentlichungstag und Bekanntmachung des Hinweises auf die Patenterteilung: **25.10.2023**
(21) Anmeldenummer: 20717627.2
(22) Anmeldetag: 06.04.2020
(51) Int. Cl.: H02K 5/22, H02K 7/116, H02K 3/52

(54) **ANTRIEBSVORRICHTUNG MIT EINEM BÜRSTENLOSEN ELEKTROMOTOR**
DRIVE DEVICE WITH A BRUSHLESS ELECTRIC MOTOR
DISPOSITIF D'ENTRAÎNEMENT AVEC UN MOTEUR ÉLECTRIQUE SANS BALAIS

(30) Priorität: 11.04.2019 DE 102019205256
(43) Veröffentlichungstag der Anmeldung: 29.12.2021
(73) Patentinhaber: Brose Fahrzeugteile SE & Co. Kommanditgesellschaft, Bamberg, 96052 Bamberg (DE)
(72) Erfinder: KALB, Roland, 96269 Rossach (DE); LANGE, Gabriele, 96364 Marktrodach (DE); PFALZGRAF, Helmut, 97246 Eibelstadt (DE); STRAUSS, Wolfgang, 97294 Unterpleichfeld (DE); CHRISTIAN, Uwe, 96275 Marktzeuln (DE)
(74) Vertreter: FDST Patentanwälte
(86) Internationale Anmeldenummer: PCT/EP2020/059717
(87) Internationale Veröffentlichungsnummer: WO 2020/207946

(56) Entgegenhaltungen:
- EP-A1- 3 292 590
- WO-A1-2013/065577
- WO-A1-2018/150968
- WO-A1-2019/009132
- DE-T5-112016 002 743
- DE-T5-112016 002 743
- JP-A- 2004 040 853
- JP-A- 2008 182 834
- JP-A- 2010 093 943
- US-A1- 2014 373 658
- US-A1- 2017 126 092

## Beschreibung

Die Erfindung betrifft eine Antriebsvorrichtung eines elektromotorischen Verstellantriebs eines Kraftfahrzeugs.

Eine Antriebsvorrichtung, die beispielsweise als elektromotorischer Verstellantrieb eines Kraftfahrzeugs ein Stellelement zwischen zwei Endpositionen entlang eines Verstellweges antreibt, umfasst üblicherweise einen Elektromotor und ein mit diesem gekoppeltes Getriebe, das in einem Getriebegehäuse angeordnet ist. Das Getriebegehäuse ist mit einem den Stator und den Rotor des Elektromotors aufnehmenden Motorgehäuse üblicherweise über eine flanschartige Anbindung verbunden. Der Elektromotor ist typischerweise ein bürstenbehafteter Innenläufer-Kommutatormotor. Ein solcher Elektromotor ist beispielsweise aus der US 2014/- 0373658 A1 oder aus der WO 2019/009132 A1 (EP 3 651 321 A1) bekannt. Derartige Antriebsvorrichtungen, insbesondere Fensterheberantriebe, sind am bestimmungsgemäßen Einbauort unter Umständen extremer Feuchtigkeit und hohen Temperaturschwankungen ausgesetzt.

Bei einer aus der DE 10 2011 121 716 B3 bekannten Antriebsvorrichtung, insbesondere eines elektromotorischen Verstellantriebs eines Kraftfahrzeugs, sind das Getriebe und der als Innenläufer ausgeführte Elektromotor in getrennten Gehäusen angeordnet. In einem Gehäuseanschlussbereich für den Elektromotor ist eine Gehäuseöffnung vorgesehen, die mittels einer gasdurchlässigen und insbesondere flüssigkeitsundurchlässigen Membran abgedeckt ist, um einen Druckausgleich des Gehäuseinnenraums mit der Umgebung bzw. dem Gehäuseaußenraum hergestellt. Eine Antriebsvorrichtung eines elektromotorischen Verstellantriebs eines Kraftfahrzeugs, aufweisend ein Antriebsgehäuse mit darin montiertem bürstenlosen Elektromotor ist auch aus JP 2010093943A bekannt.

Wird für eine derartige Antriebsvorrichtung ein bürstenloser Elektromotor eingesetzt, dessen Stator eine mehrphasige, üblicherweise dreiphasige Drehstromwicklung aufweist, sind die Phasenanschlüsse mit einer die Drehstromwicklung bestromenden Motorelektronik zu kontaktieren. Die elektrische Verbindung der Phasenanschlüsse mit der Motorelektronik kann innerhalb der Antriebsvorrichtung an eine Leiterplatte erfolgen, auf welcher die elektrischen und/oder elektronischen Bauteile der Motorelektronik montiert und untereinander verbunden sind. Alternativ kann die elektrische Verbindung der Phasenanschlüsse auch mittels einer Steckverbindung (Steckkontaktierung) mit einer außerhalb der Antriebsvorrichtung vorgesehen Motorelektronik erfolgen. Eine solche Steckverbindung, die in der Regel für jede der typischerweise drei Phasen zwei Bauteile (Metallteile) in Form eines Klemm- oder Messerkontaktes für den jeweiligen Phasenanschluss und eines Gegenkontaktes benötigt, ist vergleichsweise bauteil- und bauraum intensiv.

Der Erfindung liegt die Aufgabe zugrunde, eine Antriebsvorrichtung mit verbessertem Anschlusskonzept für die Phasenanschlüsse eines bürstenlosen Außenläufer-Elektromotors mit außerhalb des Antriebsgehäuses vorgesehener Motorelektronik anzugeben.

Diese Aufgabe wird erfindungsgemäß gelöst durch die Merkmale des Anspruchs 1. Vorteilhafte Weiterbildungen und Ausgestaltungen sind Gegenstand der Unteransprüche.

Die erfindungsgemäße Antriebsvorrichtung eines elektromotorischen Verstellantriebs eines Kraftfahrzeugs, weist ein Antriebsgehäuse mit darin montiertem oder montierbarem, bürstenlosem Elektromotor auf. Der Elektromotor weist einen Stator mit einer Drehfeldwicklung (Statorwicklung) und einen permanenterregten Rotor mit einer Rotorwelle auf, die mit einem Getriebe gekoppelt oder mit diesem koppelbar ist.

Der Stator des Elektromotors weist einen Statorgrundkörper mit einer Anzahl von sternförmig angeordneten Statorzähnen auf, die mit der Statorwicklung bewickelt sind. Der Statorgrundkörper ist außenverzahnt und weist geeigneter Weise eine zentrale Wellendurchführung für die Rotorwelle auf. In dieser Ausgestaltung des Elektromotors weist der Rotor ein den Statorgrundkörper umgebendes und mit der Rotorwelle gekoppeltes Rotorgehäuse mit darin angeordneten Permanentmagneten auf. Die statorseitige Drehfeldwicklung weist eine Anzahl von Phasenanschlüssen auf, welche die Wicklungs- oder Drahtenden von Einzel-, Doppel- oder Mehrfachspulen der Drehfeldwicklung sind.

Der Elektromotor und das Getriebe sind in jeweils einem Gehäuse, nämlich in einem Motorgehäuse und in einem Getriebegehäuse angeordnet. Das Gehäuse und das Motorgehäuse sind, insbesondere mittels einer Flanschverbindung, vorzugsweise lösbar, miteinander verbunden. Die Verbindung (Verbindungsstelle) zwischen dem Getriebegehäuse und dem Motorgehäuse wird nachfolgend als Verbindungsschnittstelle bezeichnet.

Am Motorgehäuse oder am Getriebegehäuse ist ein Steckanschluss angeordnet, der zur Aufnahme eines Gegensteckanschlusses vorgesehen und eingerichtet ist, und der eine Anzahl von Anschlusskontakten aufweist. Die beispielsweise sechs (6) Phasenanschlüsse der Statorwicklung sind in eine Füge- und/oder Kontaktierungsposition geführt. Hierzu sind die Wicklungs- oder Drahtenden der Einzel-, Doppel- oder Mehrfachspulen der Drehfeldwicklung geeigneter Weise zunächst abschnittsweise axial orientiert und dann - bezogen auf die Drehachse der Rotorwelle des Elektromtors - um ca. 90° in Radialrichtung verlaufend gebogen und somit radial orientiert.

Mit anderen Worten sind die Phasenanschlüsse vereinzelt und füge- bzw. kontaktierungsgerecht vorgebogen. In dieser, vorzugsweise radialen, Orientierung sind die Phasenanschlüsse zu deren elektrischer Kontaktierung an die Anschlusskontakte des Steckanschlusses geführt. Diese nehmen die Phasenanschlüsse vorzugsweise positionsgenau auf. In dieser Anschlussposition können die Phasenanschlüsse anschließend mit den Anschlusskontakten des Steckanschlusses selektiv (anschlussspezifisch) verlötet werden, beispielsweise auch bereits unter Herstellung oder in Vorbereitung einer Stern- oder Dreiecksschaltung.

Der Steckanschluss weist ein an das Getriebegehäuse im Bereich der Verbindungsschnittstelle angeformtes Steckergehäuse auf, in welchem die Anschlusskontakte aufgenommen sind. Diese Ausgestaltung ist für eine Steckverbindung in Radialrichtung, d. h. in eine zur Drehachse der Rotorwelle des Elektromotors radiale Richtung, für eine seitliche Steckrichtung des Gegensteckkontaktes in die Steckverbindung mit dem Steckanschluss besonders vorteilhaft.

Alternative weist der Steckanschluss ein an das Motorgehäuse und an das Getriebegehäuse im Bereich der Verbindungsschnittstelle angeformtes Gehäuseteil eines Steckergehäuses auf, in welchem die Anschlusskontakte aufgenommen sind. Diese Ausgestaltung ist für eine Steckverbindung in Axialrichtung, d. h. in eine zur Drehachse der Rotorwelle des Elektromotors parallelen Steckrichtung des Gegensteckkontaktes in die Steckverbindung mit dem Steckanschluss besonders vorteilhaft.

Die Anschlusskontakte sind in einem Anschlussblock mit einem Zugang für die Phasenanschlüsse angeordnet. Geeigneter Weise weist der Anschlussblock eine Steckkontaktseite auf, an der Anschlusspins der Anschlusskontakte für die Steckverbindung mit dem Gegenkontaktstecker vorgesehen sind. An einer der Stecckontaktseite gegenüberliegenden Anschlussseite sind Kontaktelemente der Anschlusskontakte für den Anschluss der Phasenanschlüsse vorgesehen. Zweckmäßigerweise ist die Anzahl und Anordnung der Anschlusskontakte des Steckanschlusses für eine Verschaltung der Phasenanschlüssen in Stern- oder Dreickschaltung eingerichtet.

Der Stator ist im Querschnitt vorzugsweise kreisförmig. Die Phasenanschlüsse verlaufen in einer besonders vorteilhaften Ausgestaltung in einem gemeinsamen Winkelbereich von 90° zueinander parallel und sind in dieser Formation an die Anschlusskontakte des Steckanschlusses geführt. Dabei sind die Anschlusskontakten des Steckanschlusses zweckmäßigerweise außerhalb des Stators angeordnet und dort entlang einer (gedachten) Tangentiallinie angeordnet bzw. ausgericht.

Nachfolgend werden Ausführungsbeispiele der Erfindung anhand einer Zeichnung erläutert. Darin zeigen:
- Fig. 1: in einer Seitenansicht eine erste Variante der Antriebsvorrichtung mit einem aus einem Getriebegehäuse und einem Motorgehäuse zusammengesetzten Antriebsgehäuse und darin aufgenommenem Elektromotor, und mit einem Steckanschluss für eine (radiale) seitliche Steckrichtung eines Gegensteckanschlusses,
- Fig. 2: in perspektivischer Darstellung die Antriebsvorrichtung gemäß Fig. 1 bei abgenommenem Getriebegehäuse mit motorgehäuseseitigem Anschlussblock mit steckanschlussseitigen Anschlusskontakten für Phasenanschlüsse einer Statorwicklung des Elektromotors und entlang der Steckrichtung angeordnetem Gegensteckanschluss,
- Fig. 3: in perspektivischer Darstellung den Anschlussblock gemäß Fig. 2 mit den steckanschlussseitigen Anschlusskontakten und daran kontaktierten Phasenanschlüssen,
- Fig. 4 und 5: in unterschiedlichen perspektivischen Darstellungen die Antriebsvorrichtung gemäß Fig. 1 mit entlang der Steckrichtung angeordnetem Gegensteckanschluss,
- Fig. 6: in perspektivischer Darstellung gemäß Fig. 5 die Antriebsvorrichtung bei abgenommenem Getriebegehäuse mit an die steckanschlussseitigen Anschlusskontakte radial geführten und daran kontaktierten Phasenanschlüssen,
- Fig. 7: in einer Seitenansicht eine zweite Variante der Antriebsvorrichtung mit einem aus einem Getriebegehäuse und einem Motorgehäuse zusammengesetzten Antriebsgehäuse und darin aufgenommenem Elektromotor und mit einem Steckanschluss für eine (axiale) parallele Steckrichtung des Gegensteckanschlusses,
- Fig. 8: in perspektivischer Darstellung die Antriebsvorrichtung gemäß Fig. 7 bei abgenommenem Getriebe- und Motorgehäuse mit einem Anschlussblock mit an dessen Anschlusskontakte radial geführten und daran kontaktierten Phasenanschlüssen,
- Fig. 9: in einer Seitenansicht den vom Gegensteckanschluss teilweise (abschnittsweise) aufgenommenen Anschlussblock gemäß Fig. 8,
- Fig. 10: in perspektivischer Darstellung die Antriebsvorrichtung gemäß Fig. 7 bei abgenommenem Getriebegehäuse, mit einem alternativen Anschlussblock mit an dessen Anschlusskontakte radial geführten und daran kontaktierten Phasenanschlüssen sowie mit entlang der Steckrichtung angeordnetem Gegensteckanschluss, und
- Fig. 11: in einer Explosionsdarstellung den Anschlussblock gemäß Fig. 10 und den Gegensteckanschluss.

Einander entsprechende Teile sind in allen Figuren mit den gleichen Bezugszeichen versehen.

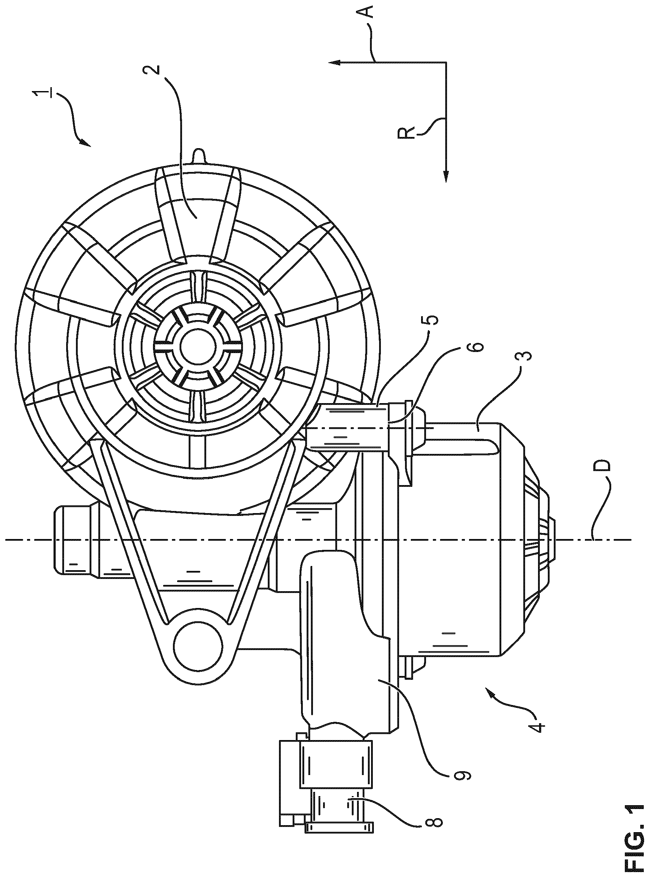

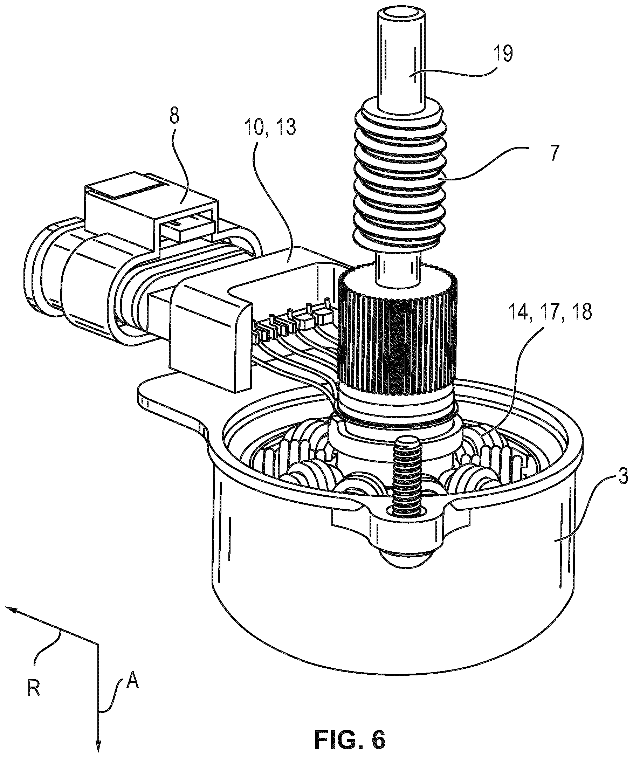

Die Fig. 1 zeigt eine elektromotorische Antriebsvorrichtung 1 mit einem Getriebegehäuse 2 und mit einem Motorgehäuse 3, in den ein Elektromotor 4 eingesetzt ist. Das Getriebegehäuse 2 und das Motorgehäuse 3 sind mittels einer Flanschverbindung 5 miteinander lösbar verbunden, wobei in dieser Verbindung zwischen dem Getriebegehäuse 2 und dem Motorgehäuse 3 eine mechanische Schnittstelle (Verbindungsschnittstelle) 6 ist. Der Elektromotor 4 treibt über ein Getriebe ein (nicht dargestelltes) Abtriebselement an. Das Getriebe der Antriebsvorrichtung 1 ist ein 90°-Umlenkgetriebe, insbesondere ein Schneckengetriebe, dessen im Getriebegehäuse 2 angeordnetes (nicht sichtbares) Schneckenrad über einen Antriebs- oder Wellenzapfen das Abtriebselement antreibt, das eine Seiltrommel für ein Zugseil, beispielsweise eines Fensterhebers eines Kraftfahrzeugs, ist. Von dem Getriebe ist in den Fig. 6, 8 und 10 eine wellenfeste Schnecke 7 dargestellt.

Ein nachfolgend auch als Anschlussstecker bezeichneter Gegensteckanschluss 8 führt (nicht dargestellte) Anschlussleitungen zu einer (nicht dargestellten) Motorelektronik zur Strom- und Spannungsversorgung bzw. zur Steuerung der als Verstellantrieb des Kraftfahrzeugs dienenden Antriebsvorrichtung 1. Der Gegensteckanschluss 8 ist in ein an das Getriebegehäuse 2 im Bereich der Verbindungsschnittstelle 6 angeformtes Steckergehäuse 9 eingesteckt.

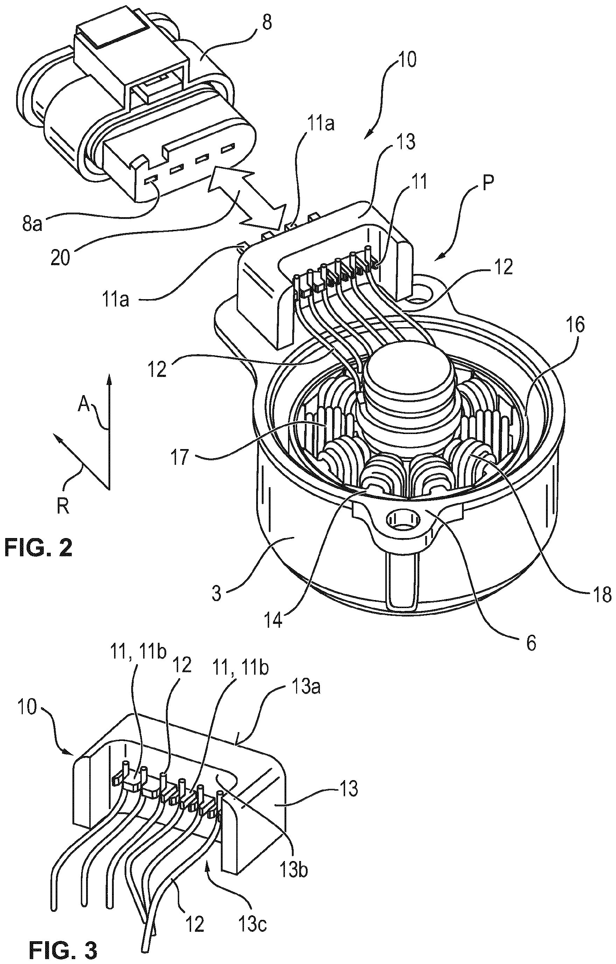

Fig. 2 zeigt die Antriebsvorrichtung 1 ohne Getriebegehäuse 2 mit Blick auf einen Steckanschluss 10 mit Anschlusskontakten 11. Die Anschlusskontakte 11 sind in einem in Fig. 3 vergrößert dargestellten Anschlussblock 13 angeordnet. Hierzu weist der Anschlussblock 13 einen Zugang 13c für die Phasenanschlüsse 12 auf.

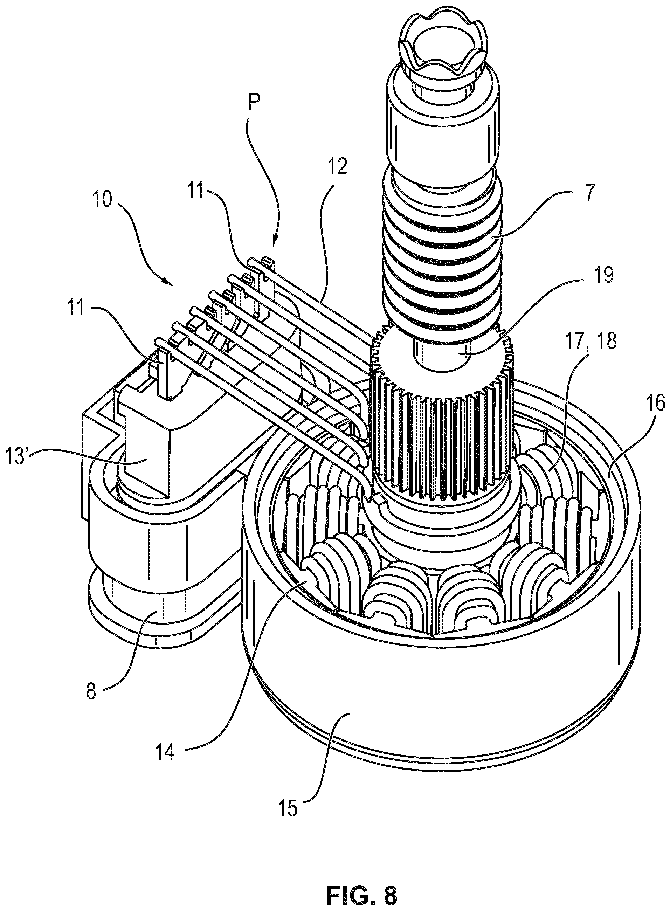

Der Elektromotor 4 ist vorzugsweise bürstenlos und weist einen Stator 14 und einen aus einem Rotorgehäuse 15 (Fig. 8) und darin gehäuseinnenwandseitig angeordneten Permanentmagneten gebildeten Rotor 16 auf. Der Stator 14 bzw. dessen außenverzahnter Statorgrundkörper trägt eine Stator- oder Drehfeldwicklung 17 mit einer Anzahl von Spulen (Einzel-, Doppel- oder Mehrfachspulen) 18, deren Wicklungs- oder Drahtenden als Phasenanschlüsse 12 an der in Fig. 2 gezeigten Stirnseite des Stators 14 in Radialrichtung R zum Steckanschluss 10 und dort an die Anschlusskontakte 11 geführt sowie an diesen kontaktiert sind.

Die in den Fig. 1 und 2 dargestellte Axialrichtung A ist koaxial zur Drehachse D des Elektromotors 4 bzw. dessen Motor- oder Rotorwelle 19, die in den Fig. 6 und 8 dargestellt ist. Die Motor- oder Rotorwelle 19, die durch eine zentrale Wellendurchführung des Stators 14 geführt ist, ist mit dem Rotorgehäuse 15 verbunden (gekoppelt) und trägt wellenfest die Schnecke 7 des Schneckengetriebes.

Der auch in Fig. 3 vergrößert dargestellte Anschlussblock 13 des Steckanschlusses 10 weist eine Steckkontaktseite 13a und gegenüberliegend eine Anschlussseite 13b auf, welche über die Zugangsöffnung 13c zugänglich ist. An der Stecckontaktseite 13a sind Anschlusspins 11a der Anschlusskontakte 11 für die Steckverbindung mit dem Gegenkontaktstecker 8 vorgesehen. An der gegenüberliegenden Anschlussseite 13b sind Kontaktelemente 11b der Anschlusskontakte 11 vorgesehen. Mit den Anschlusspins 11a der Anschlusskontakte 11 korrespondieren buchsenartige Steckaufnahmen 8a des Gegenkontaktsteckers 8. In diesen sind berührungs- und fingersicher die zu den Anschlusskontakten 11 korrespondierenden (nicht sichtbaren) Gegenkontakte des Gegensteckeranschlusses 8 aufgenommen. Die Steckrichtung für die Steckverbindung des Gegenkontaktanschlusses 8 mit dem Steckanschluss 10 ist in Fig. 2 durch den Doppelpfeil 20 veranschaulicht.

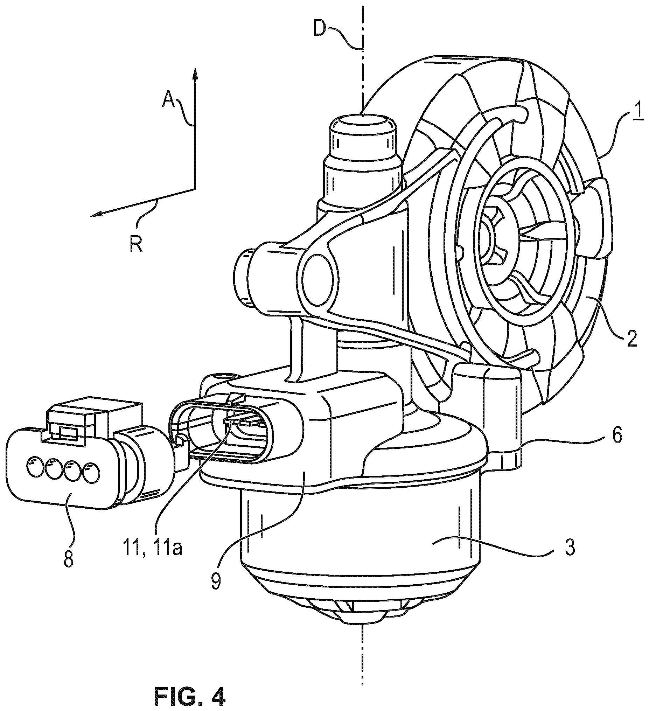

Wie auch aus den Fig. 4 bis 6 ersichtlich ist, erfolgt bei dieser Ausführungsform (Variante) der Antriebsvorrichtung 1 die Steckverbindung zwischen dem Gegensteckeranschluss 8 und dem Steckanschluss 10 in Radialrichtung R (radiale seitliche Steckrichtung).

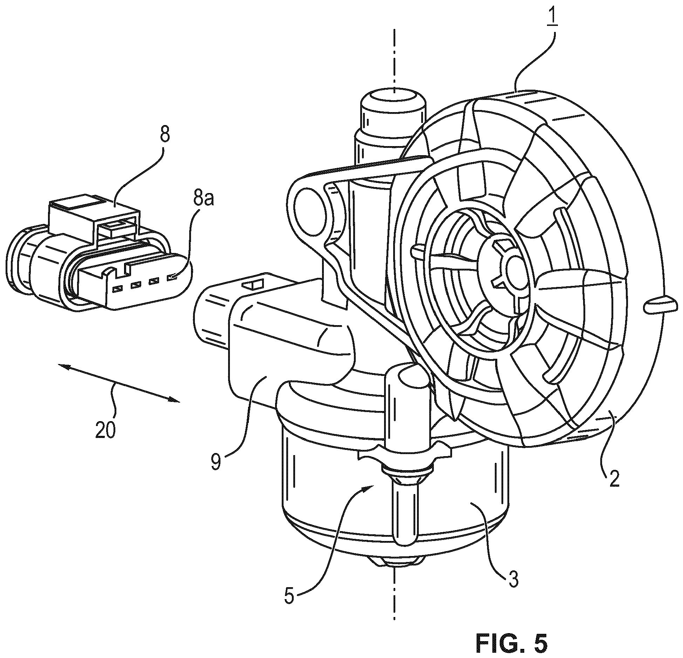

Die Fig. 4 und 5 zeigen die Antriebsvorrichtung 1 gemäß Fig. 1 in zwei unterschiedlichen perspektivischen Darstellungen mit dem Gegensteckanschluss 8 entlang dessen radial seitlicher Steckrichtung 20 mit Blick auf die Anschlusspins 11a der Anschlusskontakte 11 (Fig. 4) bzw. mit Blick auf das Steckgesicht des Gegensteckanschlusses 8 mit den buchsenartigen Steckaufnahmen 8a für die Anschlusspins 11a.

Fig. 6 zeigt die Antriebsvorrichtung 1 in einer Darstellung gemäß Fig. 5, jedoch ohne Getriebegehäuse 2 und mit hergestellter Steckverbindung des Gegensteckanschlusses 8 mit dem Steckanschluss 10.

Wie in Fig. 3 erkennbar ist, weist der Steckanschluss 10 in diesem Ausführungsbeispiel vier Anschlusskontakte 11 auf, wobei einer der Anschlusskontakte 11 drei Kontaktelemente 11b bildet. Auf diese Weise kann bereits innerhalb des Steckanschlusses 10 eine Verschaltung der Phasenanschlüsse 12, beispielsweise in Stern- oder Dreieckschaltung, erfolgen.

Wie aus den Fig. 2 und 6 ersichtlich ist, ist der Stator 14 im Querschnitt kreisförmig. Die Phasenanschlüsse 12 sind in einem Winkelbereich von etwa 90° zueinander parallel verlaufend an die Anschlusskontakte 11 des Steckanschlusses 10 geführt. Die Anschlusskontakte 11 des Steckanschlusses 10 befinden sich außerhalb des Stators 14 und sind innerhalb des Anschlussblocks 13 entlang einer Tangentiallinie angeordnet.

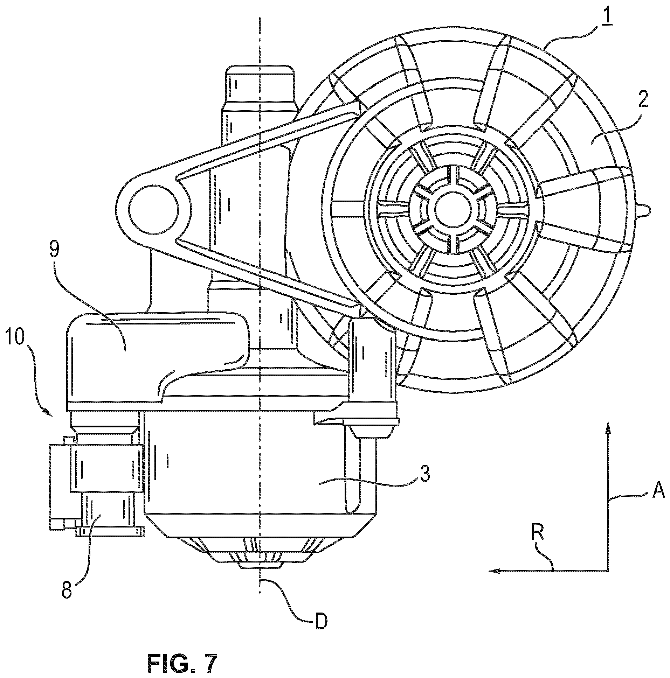

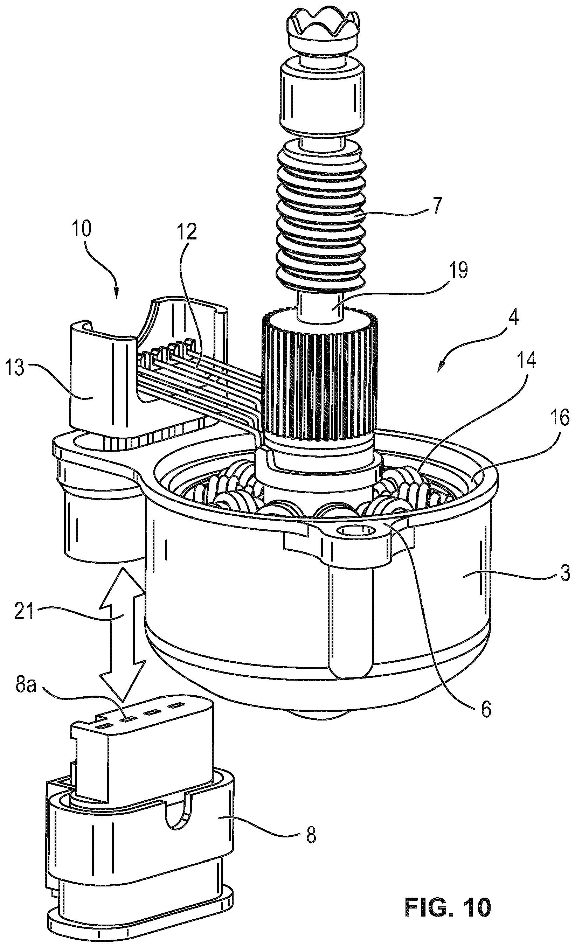

Die Fig. 7 bis 11 zeigen eine weitere Variante der Antriebsvorrichtung 1 mit axialer paralleler Steckrichtung, die durch den in Fig. 10 dargestellten Doppelpfeil 21 veranschaulicht ist.

Die Antriebsvorrichtung 1 weist wiederum ein Getriebegehäuse 2 mit daran angeformtem Steckergehäuse 9 und ein Motorgehäuse 3 mit darin aufgenommenem Elektromotor 4 auf. Dieser weist gemäß Fig. 8 wiederum einen Stator 14 mit der Statorwicklung 17 in Form der Einzel- oder Doppelspulen 18 und einen permanent erregten Rotor 16 auf, dessen Rotor- oder Motorwelle 19 wellenfest die Schnecke 7 des Getriebes trägt. Die Phasenanschlüsse 12 sind wiederum in Radialrichtung R und vorzugsweise zueinander parallel in einem Winkelbereich von 90° geführt. Auch sind die Phasenanschlüsse 12 an den Anschlusskontakten 11 des Steckanschlusses 10 elektrisch kontaktiert.

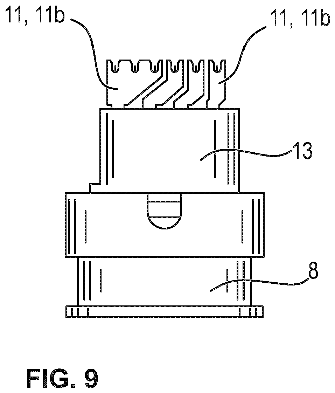

Die Fig. 8 und 9 zeigen eine Variante des Anschlussblocks 13 des Steckanschlusses 10. Aus diesem sind die Kontaktelemente 11b der Anschlusskontakte 11 axial herausgeführt.

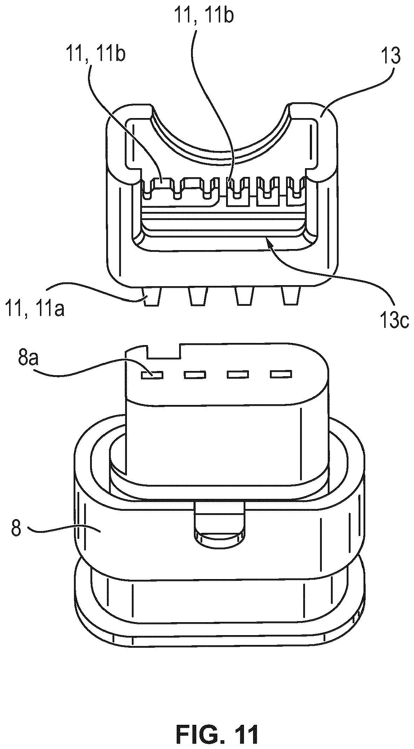

Die Fig. 10 und 11 zeigen eine weitere Variante des Anschlussblocks 13 des Steckanschlusses 10. Dieser weist wiederum einen Zugang 13c für die Phasenanschlüsse 12 auf. Im Unterschied zum in Fig. 3 dargestellten Anschlussblock 13 für die radial seitliche Steckrichtung 20 ist bei dieser Ausführungsform gemäß den Fig. 10 und 11 die Orientierung der Kontaktelemente 11b der Anschlusskontakte 11 axial.

Bei beiden Varianten der Antriebsvorrichtung 1 sind die Wicklungs- oder Drahtenden der Spulen 18 der Statorwicklung 17 abschnittsweise axial orientiert und dann um ca. 90° in Radialrichtung R verlaufend gebogen und radial orientiert. Die Phasenanschlüsse 12 der Statorwicklung 17 sind in dieser radialen Orientierung in deren gewünschte Füge- und Kontaktierungsposition P geführt.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, vorausgesetzt, dass diese Kombinationen in den Anwendungsbereich der beigefügten Ansprüche gehören.

### Bezugszeichenliste

- 1: Antriebsvorrichtung
- 2: Getriebegehäuse
- 3: Motorgehäuse
- 4: Elektromotor
- 5: Flanschverbindung
- 6: Verbindungs-/Schnittstelle
- 7: Schnecke
- 8: Gegensteckanschluss/Anschlussstecker
- 8a: Steckaufnahme
- 9: Steckergehäuse
- 10: Steckanschluss
- 11: Anschlusskotakt
- 11a: Anschlusspin
- 11b: Kontaktelement
- 12: Phasenanschluss
- 13: Anschlussblock
- 13a: Steckkontaktseite
- 13b: Anschlussseite
- 13c: Zugang
- 14: Stator
- 15: Rotorgehäuse
- 16: Rotor
- 17: Stator-/Drehfeldwicklung
- 18: Spulen
- 19: Motor-/Rotorwelle
- 20: Doppelpfeil/ Steckrichtung
- 21: Doppelpfeil/ Steckrichtung

- A: Axialrichtung
- D: Drehachse
- P: Füge-/Kontaktierungsposition
- R: Radialrichtung

## Patentansprüche

1. Antriebsvorrichtung (1) eines elektromotorischen Verstellantriebs eines Kraftfahrzeugs, aufweisend
- ein Antriebsgehäuse mit darin montiertem bürstenlosen Elektromotor (4) mit einem Stator (14) mit einer Statorwicklung (17) und mit einem Rotor (16) mit einer mit einem Getriebe (7) gekoppelten Rotorwelle (19),
- wobei der Stator (14) einen außenverzahnten Statorgrundkörper mit einer zentralen Wellendurchführung für die Rotorwelle (19) und mit einer Anzahl von sternförmig angeordneten Statorzähnen aufweist, die mit der Statorwicklung (17) bewickelt sind,
- wobei der Rotor (16) ein den Statorgrundkörper umgebendes und mit der Rotorwelle (19) gekoppeltes Rotorgehäuse (15) mit darin angeordneten Permanentmagneten aufweist,
- wobei das Antriebsgehäuse ein Getriebegehäuse (2) und ein Motorgehäuse (3) aufweist, das mit dem Getriebegehäuse (2) an einer Verbindungsschittstelle (6) verbunden ist,
- wobei am Motorgehäuse (3) oder am Getriebegehäuse (2) ein eine Anzahl von Anschlusskontakten (11) aufweisender Steckanschluss (10) zur Aufnahme eines Gegensteckanschlusses (8) vorgesehen ist,
**dadurch gekennzeichnet, dass**
- die Anschlusskontakte (11) in einem Anschlussblock (13) mit einem Zugang (13c) für die Phasenanschlüsse (12) angeordnet sind,
- wobei eine Anzahl von Phasenanschlüssen (12) der Statorwicklung (17) in eine radial orientierte Füge- und/oder Kontaktierungsposition (P) geführt ist,
- wobei die Phasenanschlüsse (12) zu deren elektrischer Kontaktierung an die Anschlusskontakte (11) des Steckanschluss (10) geführt sind, und
- wobei der Steckanschluss (10) für eine Steckverbindung in Radialrichtung (R) ein an das Getriebegehäuse (2) im Bereich der Verbindungsschnittstelle (6) angeformtes Steckergehäuse (9) aufweist, in welchem die Anschlusskontakte (11) aufgenommen sind, oder
- wobei der Steckanschluss (10) für eine Steckverbindung in Axialrichtung (A) ein an das Motorgehäuse (3) und/oder an das Getriebegehäuse (2) im Bereich der Verbindungsschnittstelle (6) angeformtes Steckergehäuse (9) aufweist, in welchem die Anschlusskontakte (11) aufgenommen sind.

2. Antriebsvorrichtung (1) nach Anspruch 1,
**dadurch gekennzeichnet,**
**dass** der Anschlussblock (13) eine Steckkontaktseite (13a), an der Anschlusspins (11a) der Anschlusskontakte (11) für die Steckverbindung mit dem Gegenkontaktstecker (8) vorgesehen sind, und eine der Steckkontaktseite (13a) gegenüberliegende Anschlussseite (13b) aufweist, an der Kontaktelemente (11b) der Anschlusskontakte (11) für den Anschluss der Phasenanschlüsse (12) vorgesehen sind.

3. Antriebsvorrichtung (1) nach Anspruch 1 oder 2,
**dadurch gekennzeichnet,**
**dass** die Anzahl und Anordnung der Anschlusskontakte (11) des Steckanschlusses (10) für eine Verschaltung der Phasenanschlüssen (12) in Stern- oder Dreieckschaltung eingerichtet ist.

4. Antriebsvorrichtung (1) nach einem der Ansprüche 1 bis 3,
**dadurch gekennzeichnet,**
- **dass** der Stator (14) im Querschnitt kreisförmig ist, und
- **dass** die Phasenanschlüsse (12) in einem gemeinsamen Winkelbereich von 90° zueinander parallel verlaufend an die Anschlusskontakte (11) des Steckanschlusses (10) geführt sind.

5. Antriebsvorrichtung (1) nach einem der Ansprüche 1 bis 4,
**dadurch gekennzeichnet,**
**dass** die Anschlusskontakte (11) des Steckanschlusses (10) außerhalb des Stators (14), insbesondere entlang einer Tangentiallinie, angeordnet sind.

## Claims

1. Drive device (1) of an electromotive adjusting drive of a motor vehicle, comprising
- a drive housing with a brushless electric motor (4) mounted therein having a stator (14) with a stator winding (17) and having a rotor (16) with a rotor shaft (19) coupled to a gearbox (7),
- wherein the stator (14) has an externally toothed stator base body with a central shaft passage for the rotor shaft (19) and with a number of stator teeth arranged in a star shape, which are wound with the stator winding (17),
- wherein the rotor (16) has a rotor housing (15) surrounding the stator base body and coupled to the rotor shaft (19) with permanent magnets arranged therein,
- wherein the drive housing comprises a transmission housing (2) and a motor housing (3) connected to the transmission housing (2) at a connection interface (6),
- wherein a plug terminal (10) having a number of terminal contacts (11) is provided on the motor housing (3) or on the transmission housing (2) for receiving a mating plug connection (8),
**characterized in**
- **that** the terminal contacts (11) are arranged in a terminal block (13) with an access (13c) for the phase terminals (12),
- wherein a number of phase terminals (12) of the stator winding (17) are guided into a radially oriented joining and/or contacting position (P),
- wherein the phase terminals (12) are led to the terminal contacts (11) of the plug terminal (10) for electrical contacting thereof, and
- the plug terminal (10) for a plug connection in the radial direction (R) having a plug housing (9), which is integrally formed on the transmission housing (2) in the region of the connection interface (6) and in which the terminal contacts (11) are accommodated, or
- the plug terminal (10) for a plug connection in the axial direction (A) having a plug housing (9), which is integrally formed on the motor housing (3) and/or on the transmission housing (2) in the region of the connection interface (6) and in which the terminal contacts (11) are accommodated.

2. Drive device (1) according to claim 1,
**characterized in**
**that** the terminal block (13) has a plug contact side (13a), on which terminal pins (11a) of the terminal contacts (11) are provided for the plug connection to the mating contact plug (8), and a terminal side (13b) opposite the plug contact side (13a), on which contact elements (11b) of the terminal contacts (11) are provided for the connection of the phase terminals (12).

3. Drive device (1) according to claim 1 or 2,
**characterized in**
**that** the number and arrangement of the terminal contacts (11) of the plug terminal (10) is configured for a connection of the phase terminals (12) in star or delta connection.

4. Drive device (1) according to one of claims 1 to 3,
**characterized in**
- **that** the stator (14) is circular in cross-section, and
- **that** the phase terminals (12) are guided to the terminal contacts (11) of the plug terminal (10) in a common angular range of 90° to one another and running parallel to one another.

5. Drive device (1) according to one of claims 1 to 4,
**characterized in**
**that** the terminal contacts (11) of the plug terminal (10) are arranged outside the stator (14), in particular along a tangential line.

## Revendications

1. Dispositif d'entraînement (1) d'un entraînement de réglage à moteur électrique d'un véhicule automobile, comprenant
- un boîtier d'entraînement, dans lequel est monté un moteur électrique sans balais (4) comportant un stator (14) avec un enroulement de stator (17) et un rotor (16) avec un arbre de rotor (19) couplé à une transmission (7),
- dans lequel le stator (14) comprend un corps de base de stator à denture extérieure avec un passage d'arbre central pour l'arbre de rotor (19) et avec un certain nombre de dents de stator disposées en étoile, qui sont enroulées avec l'enroulement de stator (17),
- dans lequel le rotor (16) comprend un boîtier de rotor (15) entourant le corps de base du stator et couplé à l'arbre de rotor (19), avec des aimants permanents disposés à l'intérieur,
- dans lequel le boîtier d'entraînement comprend un boîtier de transmission (2) et un boîtier de moteur (3), qui est relié au boîtier de transmission (2) au niveau d'une interface de connexion (6),
- dans lequel il est prévu sur le carter de moteur (3) ou sur le carter de boîte de vitesses (2) un raccordement enfichable (10) comprenant un certain nombre de contacts de connexion (11) pour recevoir un raccord à enfichable complémentaire (8),
**caractérisé en ce que**
- les contacts de connexion (11) sont disposés dans un bloc de connexion (13) avec un accès (13c) pour les connexions de phase (12),
- dans lequel un certain nombre de connexions de phase (12) de l'enroulement de stator (17) sont guidées dans une position d'assemblage et/ou de mise en contact (P) orientée radialement,
- dans lequel les connexions de phase (12) sont guidées vers les contacts de connexion (11) du raccordement enfichable (10) pour leur mise en contact électrique, et
- dans lequel le raccordement enfichable (10) pour une connexion enfichable dans la direction radiale (R) comprend un boîtier de connecteur (9) formé sur le carter de boîte de vitesses (2) dans la zone de l'interface de connexion (6), dans lequel les contacts de connexion (11) sont logés, ou
- dans lequel le raccordement enfichable (10) pour une connexion enfichable dans la direction axiale (A) comprend un boîtier de connecteur (9) formé sur le carter de moteur (3) et/ou sur le carter de boîte de vitesses (2) dans la zone de l'interface de connexion (6), dans lequel sont logés les contacts de connexion (11).

2. Dispositif d'entraînement (1) selon la revendication 1,
**caractérisé en ce**
**que** le bloc de connexion (13) comprend un côté de contact enfichable (13a), sur lequel sont prévues des broches de connexion (11a) des contacts de connexion (11) pour la connexion enfichable avec le connecteur à contact opposé (8), et un côté de connexion (13b) opposé au côté de contact enfichable (13a), sur lequel sont prévus des éléments de contact (11b) des contacts de connexion (11) pour la connexion des connexions de phase (12).

3. Dispositif d'entraînement (1) selon la revendication 1 ou 2,
**caractérisé en ce**
**que** le nombre et la disposition des contacts de connexion (11) du raccordement enfichable (10) sont aménagés pour un câblage des connexions de phase (12) en étoile ou en triangle.

4. Dispositif d'entraînement (1) selon l'une des revendications 1 à 3, **caractérisé en ce**
- **que** le stator (14) a une section transversale circulaire, et
- **que** les connexions de phase (12) sont guidées parallèlement les uns aux autres dans une zone angulaire commune de 90° sur les contacts de connexion (11) du raccordement enfichable (10).

5. Dispositif d'entraînement (1) selon l'une des revendications 1 à 4,
**caractérisé en ce**
**que** les contacts de connexion (11) du raccordement enfichable (10) sont disposés à l'extérieur du stator (14), en particulier le long d'une ligne tangentielle.
